(19) **Europäisches Patentamt / European Patent Office / Office européen des brevets**

(11) **EP 3 035 476 B1**

(12) **EUROPEAN PATENT SPECIFICATION**

(45) Date of publication and mention
of the grant of the patent:
**24.07.2019 Bulletin 2019/30**

(51) Int Cl.:
*H02J 1/00* (2006.01)    *H02J 3/36* (2006.01)

(21) Application number: **14198835.2**

(22) Date of filing: **18.12.2014**

(54) **Method, controller, and computer program product for controlling a voltage in a DC power grid**

Verfahren, Controller und Computerprogrammprodukt zur Steuerung einer Spannung in einem Gleichstromnetz

Procédé, contrôleur et produit de programme informatique permettant de commander une tension dans un réseau électrique à courant continu

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**22.06.2016 Bulletin 2016/25**

(73) Proprietor: **Siemens Aktiengesellschaft**
**80333 München (DE)**

(72) Inventor: **Münz, Ulrich**
**81673 München (DE)**

(56) References cited:
EP-A1- 3 002 846          WO-A1-2012/044369
US-A1- 2016 094 031

• WEIXING LU ET AL: "DC voltage limit compliance in voltage-source converter based multi-terminal HVDC", POWER ENGINEERING SOCIETY GENERAL MEETING, 2005. IEEE SAN FRANCISCO, CA, USA JUNE 12-16, 2005, PISCATAWAY, NJ, USA,IEEE, 12 June 2005 (2005-06-12), pages 1290-1295, XP010821591, DOI: 10.1109/PES.2005.1489346 ISBN: 978-0-7803-9157-4

• Kory W. Hedman: "The Application of Robust Optimization in Power Systems Empowering Minds to Engineer the Future Electric Energy System", Arizona State University, 31 August 2014 (2014-08-31), XP055190147, Retrieved from the Internet: URL:http://www.google.de/url?sa=t&rct=j&q= &esrc=s&frm=1&source=web&cd=1&ved=0CCY QFjA A&url=http%3A%2F%2Fwww.pserc.wisc.edu%2 Fpu blications%2Freports%2F2014_reports%2FHed m an_PSERC_Report_RobustOptimization_S-51_ Au g_2014.pdf&ei=eDdbVaLHE4uyswH_ioDIAQ&us g=A FQjCNHeiYf_ZU2tsPTm51p1O_I0-XiUWw&sig2= Woh ujOmwj9k90 [retrieved on 2015-05-19]

• ARDAKANI ALI JAHANBANI ET AL: "Identification of Umbrella Constraints in DC-Based Security-Constrained Optimal Power Flow", IEEE TRANSACTIONS ON POWER SYSTEMS, IEEE SERVICE CENTER, PISCATAWAY, NJ, US, vol. 28, no. 4, 1 November 2013 (2013-11-01), pages 3924-3934, XP011530790, ISSN: 0885-8950, DOI: 10.1109/TPWRS.2013.2271980 [retrieved on 2013-10-17]

**Description**

For transmission or distribution of electrical power DC power grids are gaining more and more importance. In particular, high voltage DC links are often installed to support high voltage AC grids. Moreover, in industrial facilities with a plurality of large machines, medium voltage DC grids are often more efficient in supplying power to the machines than medium voltage AC grids. As usual, 'DC' stands for direct current and 'AC' for alternating current.

In contemporary power grids with several terminals, i.e. nodes of the power grid which supply or demand power to or from the power grid, it becomes increasingly complex to control voltage and power flow for the various terminals. Usually, several predetermined boundary conditions for the voltages and the power flows have to be met.

This is particularly true for DC power grids. If the DC power grid comprises one or more terminals which are strong enough to control their DC voltages, an approach in the sense of a master-slave system may be used. Those terminals which are strong enough to control their DC voltages in the DC power grid control the DC voltages and all other terminals supply or demand DC power. A terminal controlling a DC voltage in the DC power grid may be referred to as 'master terminal' or 'V terminal' and a terminal controlling a DC power may be referred to as 'slave terminal' or 'P terminal'. The master terminals of the DC power grid have to balance their DC voltages with the power flows of the DC power grid in such a way that all boundary conditions are met. This control is particular complex in case of DC power grids comprising several master terminals.

Known methods for voltage control in a DC power grid include methods based on numerically solving a set of nonlinear power flow equations, which combine values for DC powers and DC voltages in the DC power grid. However, known iterative solutions of the nonlinear power flow equations often imply time consuming calculations. Furthermore, varying values for the DC power supply and demand lead to a significant increase of numerical complexity. Known methods are disclosed in the following documents:

WEIXING LU ET AL: "DC voltage limit compliance in voltage-source converter based multi-terminal HVDC", POWER ENGINEERING SOCIETY GENERAL MEETING, 2005. IEEE SAN FRANCISCO, CA, USA JUNE 12-16, 2005, PISCATAWAY, NJ, USA, IEEE, 12 June 2005 (2005-06-12), pages 1290-1295, XP010821591, DOI: 10.1109/PES.2005.1489346 ISBN: 978-0-7803-9157-4;

WO 2012/044369 A1 and

Kory W. Hedman: "The Application of Robust Optimizationin Power Systems Empowering Minds to Engineer the Future Electric Energy System",Arizona State University, August 2014 (2014-08-31).

It is an object of the present invention to provide a method, a controller, and a computer program product for controlling a voltage in a DC power grid that are more flexible in particular in case of several master terminals and/or in case of varying or uncertain DC power flows.

This object is achieved by a method according to patent claim 1, a controller according to patent claim 8, and a computer program product according to patent claim 9.

According to the invention, a method, a controller, and a computer program product for controlling a voltage in a DC power grid comprising a master terminal controlling a DC voltage of the master terminal and a slave terminal controlling a DC power of the slave terminal are provided. Here, the master terminal and/or the slave terminal may be a converter, an inverter or a rectifier. The controller and/or the computer program product may be central instances for the DC power grid or distributed over several communicating instances.

A first tolerance range for DC voltages of the master terminal and of the slave terminal as well as a second tolerance range for the DC power of the slave terminal are received. Here, the tolerance ranges may be represented as intervals defined by minimum and maximum values of the respective quantities or defined by midpoint and deviation values. With that, a robust optimization process is run by a processor for a set of DC power flow equations combining values for DC voltages and DC powers of the master terminal and of the slave terminal. Robust optimization methods are a particular class of optimization methods allowing for uncertain parameters. They specifically allow the optimization of first quantities such that given constraints are satisfied for a whole domain of uncertain second quantities. The constraints are often denoted as robust optimization constraints and the domain of uncertain second quantities is often denoted as uncertainty or robust optimization uncertainty.

According to the invention the first and second tolerance range are input to the robust optimization process, using the first tolerance range as robust optimization constraint and the second tolerance range as robust optimization uncertainty. With that, the robust optimization process determines a DC voltage set point for the master terminal so that the set of DC power flow equations and the robust optimization constraint are fulfilled for the second tolerance range. According to the determined DC voltage set point the DC voltage of the master terminal is controlled.

Because the invention uses tolerance ranges for a robust optimization process instead of given or estimated power grid parameters, the DC voltage set point can be determined in compliance with the tolerance ranges even if a power supply and/or demand is not known precisely or shows variations. In particular, the invention allows a fast and flexible determination and optimization of the DC voltage set point, thus allowing an efficient voltage control of the master terminal with a short reaction time.

The invention is easily applicable to DC power grids with several master terminals by applying the above method steps to all master terminals. The usage of the robust optimization process allows an efficient balancing of the DC voltages and power flows in particular in case of several master terminals.

Particular embodiments of the invention are given by the dependent claims.

According to the invention a target value for a target DC power of the master terminal may be received and input to the robust optimization process taking into account a deviation of the target value from a DC power of the master terminal in a robust optimization cost function. With that, the DC voltage set point may be determined so that the robust optimization cost function is minimized for the second tolerance range.

This allows minimizing deviations and fluctuations of the DC power of the master terminal, thus enhancing stability.

According to an embodiment of the invention an offset to the determined DC voltage set point may be included when controlling the DC voltage of the master terminal. The offset may be dependent on the deviation of a target value for a target DC power of the master terminal from a DC power of the master terminal. This dependency may be a proportionality.

This control is particular advantageous in case of a DC power grid comprising several master terminals. It allows to share load steps in a predetermined way among the terminals.

According to an embodiment of the invention the first tolerance range may be received from a conventional power generator at the master terminal. Furthermore, the second tolerance range may be received from a renewable power generator or a load device at the slave terminal.

Moreover, the DC voltage set point may be transmitted to a conventional power generator at the master terminal.

Advantageously, the set of DC power flow equations may comprise a linearized DC power flow equation.

In particular, a linearization leading to the linearized DC power flow equation may be based on neglecting higher order terms in deviations of the DC voltages of the master terminal and of the slave terminal from a nominal DC voltage.

With such a linearization the DC power flow equations can be simplified considerably. This allows a fast and stable numerical solution even in case of a very large DC power grid.

Moreover, the robust optimization process may be a linear robust optimization process based on a linear programming routine. Linear programming routines allow a particular fast and stable numerical solution of constrained optimization problems. Furthermore, the robust optimization process can be efficiently distributed over several processors.

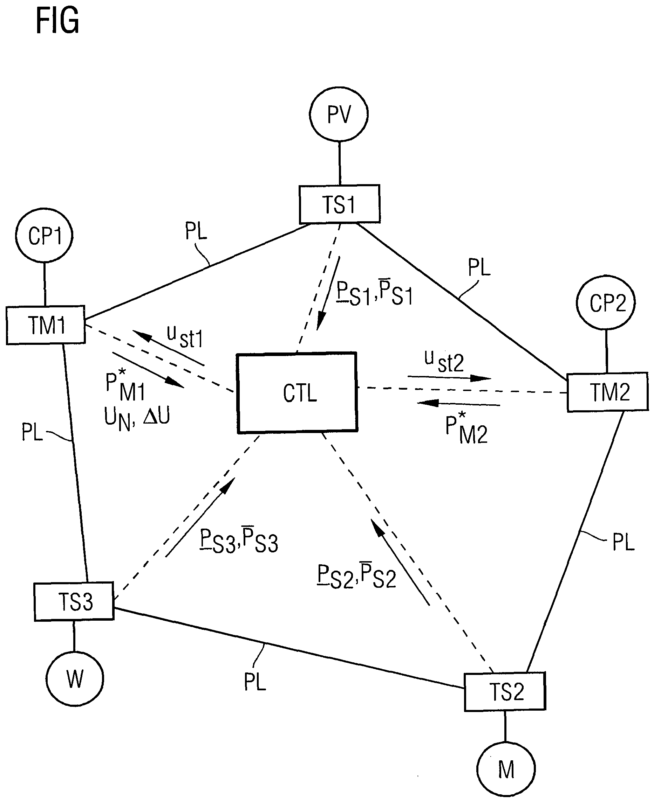

Particular exemplary embodiments of the invention are described in the following paragraphs in conjunction with the drawing.

The figure shows in schematic representation a DC power grid with several master terminals and several slave terminals.

The figure depicts an exemplary embodiment of a DC power grid with several DC voltage controlling master terminals TM1 and TM2 and several DC power controlling slave terminals TS1, TS2, and TS3 in schematic representation. The master terminals TM1, TM2 and the slave terminals TS1, TS2, TS3 may be converters, inverters and/or rectifiers. According to the present embodiment, the master terminal TM1 is coupled to a conventional power generator CP1, the master terminal TM2 is coupled to a conventional power generator CP2, the slave terminal TS1 is coupled to a photovoltaic power plant PV, the slave terminal TS2 is coupled to a machinery M as a load device, and the slave terminal TS3 is coupled to a wind power plant W. The conventional power generators CP1 and CP2, e.g. gas-fired power plants, are assumed to be strong enough to enable the master terminals TM1 and TM2 to control the DC voltages of the DC power grid at their respective supply point. The master terminals TM1, TM2 and the slave terminals PS1, PS2, PS3 are connected by power lines PL. Alternatively or additionally, the master terminals TM1 and TM2 may be interconnection points of the DC power grid to an AC power grid.

For controlling the DC voltages of the master terminals TM1 and TM2 a controller CTL is provided in the DC power grid. The controller CTL is coupled to the master terminals TM1 and TM2 as well as to the slave terminals PS1, PS2, and PS3 as indicated by dashed lines in the figure. The controller CTL may be a central instance for the DC power grid or distributed over several communicating instances, e.g. the master terminals TM1, TM2 and/or the slave terminals PS1, PS2, PS3.

From each of the master terminals TM1 and TM2 the controller CTL receives a target value $P^*_{M1}$ or $P^*_{M2}$, respectively, for a target DC power of the respective master terminal TM1 or TM2. The target values $P^*_{M1}$ and $P^*_{M2}$ are DC powers desired for the master terminals TM1 and TM2, e.g. in order to operate these terminals and/or the connected conventional power generators CP1 and CP2 at a favorable working point. In particular, the target values $P^*_{M1}$ and $P^*_{M2}$ may be sent from the conventional power generators CP1 and CP2 to the respective master terminal TM1 or TM2.

Furthermore, the controller CTL receives from the master terminal TM1 a first tolerance range specified by a value of a nominal DC voltage $U_N$ and a value of a voltage deviation $\Delta U$ from that nominal DC voltage $U_N$. Alternatively or additionally the first tolerance range $U_N$, $\Delta U$ may be provided by a grid code of the DC power grid. In particular, the first tolerance range $U_N$, $\Delta U$ specifies a common tolerance range for the DC voltages of all terminals TM1, TM2, PS1, PS2, and PS3.

Moreover, the controller CTL receives from each of the slave terminals PS1, PS2, and PS3 a second tolerance range specified by values $[\underline{P}_{S1}, \overline{P}_{S1}]$, $[\underline{P}_{S2}, \overline{P}_{S2}]$ or $[\underline{P}_{S3}, \overline{P}_{S3}]$, respectively, defining an individual DC power interval for the respective slave terminal PS1, PS2, or PS3. Here $\underline{P}_{S1}$, $\underline{P}_{S2}$, and $\underline{P}_{S3}$ denote the lower limits and $\overline{P}_{S1}$, $\overline{P}_{S2}$, and $\overline{P}_{S3}$ the upper limits of the respective second tolerance range. The specification of the second tolerance ranges for the DC powers of the slave terminals PS1, PS2, and PS3 covers the common case where the power supply or demand of the slave terminals PS1, PS2, and PS3 is not constant and/or not known exactly but only known to lie within an interval, here the respective second tolerance range. This is often the case if renewable power generators, here PV and W, or load devices, here M, with varying power supply or demand are coupled to the slave terminals PS1, PS2, and PS3.

The controller CTL feeds the first tolerance range specified by $U_N$ and $\Delta U$, the second tolerance ranges specified by $\underline{P}_{S1}$, $\overline{P}_{S1}$, $\underline{P}_{S2}$, $\overline{P}_{S2}$, $\underline{P}_{S3}$, and $\overline{P}_{S3}$ and the target values $P^*_{M1}$ and $P^*_{M2}$ into a robust optimization process for a set of DC power flow equations as described in detail below. Here, the first tolerance range $U_N$, $\Delta U$ is used as a robust optimization constraint and the second tolerance ranges specified by $\underline{P}_{S1}, \overline{P}_{S1},...,\underline{P}_{S3},\overline{P}_{S3}$ are used as robust optimization uncertainties. A deviation of the target values $P^*_{M1}$ and $P^*_{M2}$ from an actual DC power of a respective master terminal TM1 or TM2 is taken into account in a robust optimization cost function.

Alternatively or additionally, the robust optimization cost function may take into account the costs of the power generation or consumption, here by CP1, CP2, PV, W, or M, at a respective master or slave terminal.

The robust optimization process outputs an optimized DC voltage set point $u_{st1}$ for the master terminal TM1 and an optimized DC voltage set point $u_{st2}$ for the master terminal TM2 so that the set of DC power flow equations and the robust optimization constraint are fulfilled for all of the second tolerance ranges specified by $\underline{P}_{S1}, \overline{P}_{S1},...,\underline{P}_{S3},\overline{P}_{S3}$, and the robust optimization cost function is minimized. Each of the DC voltage set points $u_{st1}$ and $u_{st2}$ is transmitted from the controller CTL to the respective master terminal TM1 or TM2 for controlling its DC voltage.

In the following a static model for the DC power grid is described in more detail. The terminals of the DC power grid, in the figure referred to as PM1, PM2, PS1, PS2, and PS3, are now referred to by an index i, j, k etc.. A power line, in the figure referred to as PL, between terminal i and terminal j is described by a series admittance $g_{ij} = g_{ji} >= 0$. The DC voltages at the terminals i and j that are connected by the series admittance $g_{ij}$ are $u_i$ and $u_j$. A DC current flowing from terminal i to terminal j is then $i_{ij} = (u_i - u_j)*g_{ij}$. Accordingly, the DC power $p_{ij}$ flowing at terminal i into the power line from terminal i to terminal j is given by $pij = u_i * i_{ij}$. This leads to a set of DC power flow equations for a DC power grid with N terminals:

$$p_i = \sum_{j \in \mathcal{N}_i} p_{ij} = \sum_{j \in \mathcal{N}_i} g_{ij} u_i (u_i - u_j), \tag{1}$$

where $p_i$ denotes a net DC power generated at terminal i and $\mathcal{N}_i$ denotes the set of all neighboring terminals j connected to terminal i by a power line. The DC power flow equations are a set of nonlinear equations combining characteristic quantities of the DC power grid. These equations can be rewritten in vector form as

$$P = \mathrm{diag}(U)GU, \tag{2}$$

where $P = \mathrm{vec}(p_i)$ and $U = \mathrm{vec}(u_i)$ are the vectors of the DC powers $p_i$ and the DC voltages $u_i$, and

$$G = \begin{cases} -g_{ij} & \text{for } i \neq j \\ \sum_{k \in \mathcal{N}_i} g_{ik} & \text{for } i = j \end{cases} \tag{3}$$

is an admittance matrix of the DC power grid. Apparently, G is a Laplacian matrix with all eigenvalues in the right half complex plane except for a single eigenvalue 0. The left and right eigenvectors corresponding to the zero eigenvalue are **1** and **1**$^T$, where **1**$^T$ denotes the vector (1,1,...,1).

In general, a DC power grid may contain buses with a terminal and buses without a terminal. In the following it is assumed that all buses without a terminal have been removed from the DC power grid model, e.g. by applying the so called Kron reduction. Hence, it can be assumed that all buses of the DC power grid are connected to a terminal.

The model comprises two types of terminals

- V terminals or master terminals, where the DC voltage $u_i$ is controlled and
- P terminals or slave terminals, where the DC power $p_i$ is controlled.

Without loss of generality it can be assumed that the vectors in equation (2) are ordered such that $P = vec(P_M, P_S)$ and $U = vec(U_M, U_S)$ first contain partial vectors of DC powers $P_M$ and DC voltages $U_M$ of the master terminals and then partial vectors of DC powers $P_S$ and DC voltages $U_S$ of the slave terminals. With that, equation (2) can be rewritten in block form as

$$\begin{pmatrix} P_M \\ P_S \end{pmatrix} = \text{diag}(U_M, U_S) \begin{pmatrix} G_{MM} & G_{SM} \\ G_{MS} & G_{SS} \end{pmatrix} \begin{pmatrix} U_M \\ U_S \end{pmatrix}, \qquad (4)$$

where $G_{SM} = G^T_{MS}$.

With regard the present invention the following question is considered:
Given a DC power grid with at least one master terminal and at least one slave terminal and given a maximum permissible voltage deviation $\Delta U$ for all terminals, i.e. $u_i \in [U_N - \Delta U, U_N + \Delta U]$, $\forall i$. If the DC powers $P_S$ of the slave terminals are only known to lie within some terminal-specific intervals $[\underline{P}_S, \overline{P}_S] \ni P_S$, how should the DC voltages $U_M$ at the master terminals be adjusted such that the DC voltages at all terminals are within the above voltage interval and the DC powers $P_M$ of the master terminals are close to their desired target values $P^*_M$.

The above question defines a so called robust optimization problem. Robust optimization methods are a particular known class of optimization methods allowing for uncertain parameters. They specifically allow the optimization of first quantities, here the DC powers $P_M$ and/or the DC voltages $U_M$ of the master terminals, such that given constraints, here the maximum permissible voltage deviation at all terminals, are satisfied for a whole domain of uncertain second quantities, here the DC powers $P_S$ of the slave terminals. The constraints are often denoted as robust optimization constraints and the domain of uncertain second quantities is often denoted as uncertainty or robust optimization uncertainty.

In order to simplify the solution of the DC power flow equation (4) this equation is linearized. For that, it is assumed that all DC voltages are close to the nominal DC voltage $U_N$ and voltage differences $u_i - u_j$ are much more relevant for the power flows than the absolute values of these voltages. This leads to a linearized DC power flow equation

$$\begin{pmatrix} P_M \\ P_S \end{pmatrix} = U_N \begin{pmatrix} G_{MM} & G_{SM} \\ G_{MS} & G_{SS} \end{pmatrix} \begin{pmatrix} U_M \\ U_S \end{pmatrix}. \qquad (5)$$

This linearization also implies that the DC power grid appears lossless because $p_{ij} = -p_{ji}$, i.e. the DC power flow that flows at terminal i into the power line between terminal i and terminal j is equal to the DC power flow that leaves this power line at terminal j. Hence, the sum of all in-flowing and out-flowing DC power is zero, i.e.

$$1^T P_M + 1^T P_S = 0. \qquad (6)$$

Moreover, the linearization implies that the DC power P is independent of constant voltage offsets, i.e.

$$\begin{pmatrix} P_M \\ P_S \end{pmatrix} = U_N \begin{pmatrix} G_{MM} & G_{SM} \\ G_{MS} & G_{SS} \end{pmatrix} \begin{pmatrix} U_M \\ U_S \end{pmatrix} = U_N \begin{pmatrix} G_{MM} & G_{SM} \\ G_{MS} & G_{SS} \end{pmatrix} \left( \begin{pmatrix} U_M \\ U_S \end{pmatrix} + \delta u 1 \right), \qquad (7)$$

where $\delta u$ is any real scalar value.

In order to obtain a unique mapping from the DC voltages U to the DC powers P, the equation of the first master terminal is removed from the system of equations (5). Therefore, we write

$$P = \begin{pmatrix} -\mathbf{1}^T \\ \mathbb{I} \end{pmatrix} \tilde{P} \qquad \tilde{P} = \begin{pmatrix} p_2 \\ \vdots \\ p_N \end{pmatrix}^T \qquad (8)$$

Moreover, the DC voltages are transformed into new coordinates as follows

$$U - u_1 \mathbf{1} = \begin{pmatrix} 0 \\ u_2 - u_1 \\ \vdots \\ u_N - u_1 \end{pmatrix} = \begin{pmatrix} 0 \\ \tilde{U} \end{pmatrix}. \qquad (9)$$

Since the vectors **1** and **1**$^T$ are the right and left eigenvector of the matrix G corresponding to the eigenvalue zero, we obtain

$$P = \begin{pmatrix} -\mathbf{1}^T \\ \mathbb{I} \end{pmatrix} \tilde{P} = U_N \begin{pmatrix} G_{MM} & G_{SM} \\ G_{MS} & G_{SS} \end{pmatrix} (U - u_1 \mathbf{1}) \qquad (10)$$

$$= U_N \begin{pmatrix} G_{MM} & G_{SM} \\ G_{MS} & G_{SS} \end{pmatrix} \begin{pmatrix} 0 \\ \tilde{U} \end{pmatrix}. \qquad (11)$$

Next, the first row and the first column of G are removed and a reduced system is obtained:

$$\begin{pmatrix} \tilde{P}_M \\ P_S \end{pmatrix} = U_N \begin{pmatrix} \tilde{G}_{MM} & \tilde{G}_{SM} \\ \tilde{G}_{MS} & G_{SS} \end{pmatrix} \begin{pmatrix} \tilde{U}_M \\ \tilde{U}_S \end{pmatrix}. \qquad (12)$$

In a first step, equation (12) is solved for $\tilde{U}_S$ to obtain

$$\tilde{U}_S = G_{SS}^{-1} \left( \frac{P_S}{U_N} - \tilde{G}_{MS} \tilde{U}_M \right) \qquad (13)$$

Here, the partial matrix G$_{SS}$ is always invertible because the DC power grid is connected. Equation (13) can be included into equation (12) to obtain

$$U_N (\tilde{G}_{MM} - \tilde{G}_{SM} G_{SS}^{-1} \tilde{G}_{MS}) \tilde{U}_M = \tilde{P}_M - \tilde{G}_{SM} G_{SS}^{-1} P_S \qquad (14)$$

The preceding linearization of the DC power flow equations allows to provide a solution to the problem raised in the question above, as a solution of the following robust optimization problem that determines optimal DC voltage set points U$_M$ for the master terminals:

$$\min_{\tilde{U}_M, u_1} \gamma \qquad (15a)$$

$$s.t. \gamma \geq \left\| P_M^* - \binom{-\mathbf{1}^T}{\mathbb{I}} \left( U_N(\tilde{G}_{MM} - \tilde{G}_{SM}G_{SS}^{-1}\tilde{G}_{MS})\tilde{U}_M + \tilde{G}_{SM}G_{SS}^{-1}P_S \right) - \binom{-\mathbf{1}^T P_S}{0} \right\|_\infty$$

$$\forall P_S \in \{\underline{P}_S, \overline{P}_S\} \tag{15b}$$

$$\Delta U \geq \left\| G_{SS}^{-1}\left(\frac{P_S}{U_N} - \tilde{G}_{MS}\tilde{U}_M\right) + \mathbf{1}(u_1 - U_N) \right\|_\infty, \forall P_S \in \{\underline{P}_S, \overline{P}_S\} \tag{15c}$$

$$\Delta U \geq \left\| \tilde{U}_M + \mathbf{1}(u_1 - U_N) \right\|_\infty \tag{15d}$$

$$\Delta U \geq \|u_1 - U_N\|, \tag{15e}$$

where $\{\underline{P}_S, \overline{P}_S\}$ is the set of corner points of the convex polytope $[\underline{P}_S, \overline{P}_S]$ that encloses all permissible $P_S$ values and $\|\cdot\|\infty$. denotes the infinity norm, i.e. the maximal absolute value. As usual, the abbreviation "s.t." means "such that" and denotes the constraints of the minimization.

Term (15b) represents the robust optimization cost function taking into account the deviation of the target values $P^*_M$ from the actual DC powers of the master terminals. Alternatively or additionally, the robust optimization cost function may take into account the costs of the power generation or consumption at a respective master or slave terminal, e.g. in form of a dot product $c^T \cdot P$ of a cost vector c with the DC power vector P.

Advantageously, a droop control may be used for controlling an actual DC voltage $u'_i$ to be applied at the master terminal i according to $u'_i = u_i - k_u(p'_i - p_i)$, where $u_i$ is the DC voltage set point for terminal i determined by equation (15), $k_u$ is a droop gain, $p'_i$ is a measured DC power actually supplied by terminal i, and $p_i$ is the DC power of terminal i as determined by expression (15).

In the figure the determined DC voltage set points $U_M$ for the master terminals are referred to as $u_{st1}$ and $u_{st2}$.

The above minimization problem is a linear robust optimization problem that can be solved very efficiently by standard linear programming routines like interior-point methods or the known simplex algorithm.

The embodiments as described above illustrate the advantages of the invention. In particular, the invention allows for a direct optimization of the controllable DC voltages of the master terminals within a first tolerance range, an incorporation of uncertain DC powers of the slave terminals, and a formulation as a linear programming problem. The latter allows for a fast solution even for a great number of optimization variables.

**Claims**

1. Method for controlling a voltage in a DC power grid comprising a master terminal (TM1, TM2) controlling a DC voltage of the master terminal and a slave terminal (TS1,...,TS3) controlling a DC power of the slave terminal, the method comprising:

   a) receiving a first tolerance range ($U_N$, $\Delta U$) for DC voltages of the master terminal (TM1, TM2) and of the slave terminal (TS1,...,TS3),
   b) receiving a second tolerance range ($\underline{P}_{S1}, \overline{P}_{S1},...,\underline{P}_{S3}, \overline{P}_{S3}$) for the DC power of the slave terminal (TS1,...,TS3),
   c) running, by a processor, a robust optimization process for a set of DC power flow equations combining values for DC voltages and DC powers of the master terminal (TM1, TM2) and of the slave terminal (TS1,...,TS3),
   d) inputting the first and second tolerance range to the robust optimization process, using the first tolerance range ($U_N$, $\Delta U$) as robust optimization constraint and the second tolerance range ($\underline{P}_{S1}, \overline{P}_{S1},...,\underline{P}_{S3}, \overline{P}_{S3}$) as robust optimization uncertainty,
   e) determining by the robust optimization process a DC voltage set point ($u_{st1}$, $u_{st2}$) for the master terminal (TM1, TM2) so that the set of DC power flow equations and the robust optimization constraint are fulfilled for the second tolerance range ($\underline{P}_{S1}, \overline{P}_{S1},...,\underline{P}_{S3}, \overline{P}_{S3}$), and
   f) controlling the DC voltage of the master terminal (TM1, TM2) according to the determined DC voltage set point ($u_{st1}$, $u_{st2}$), wherein

a target value ($P^*_{M1}$, $P^*_{M2}$) for a target DC power of the master terminal (TM1, TM2) is received,

the target value ($P^*_{M1}$, $P^*_{M2}$) is input to the robust optimization process taking into account a deviation of the target value ($P^*_{M1}$, $P^*_{M2}$) from a DC power of the master terminal (TM1, TM2) in a robust optimization cost function, and

the DC voltage set point ($u_{st1}$, $u_{st2}$) is determined so that the robust optimization cost function is minimized for the second tolerance range ($\underline{P}_{S1}$, $\overline{P}_{S1}$,..., $\underline{P}_{S3}$, $\overline{P}_{S3}$).

2. Method according to claim 1, wherein a target value ($P^*_{M1}$, $P^*_{M2}$) for a target DC power of the master terminal (TM1, TM2) is received, and when controlling the DC voltage of the master terminal (TM1, TM2) an offset to the determined DC voltage set point ($u_{st1}$, $u_{st2}$) is included, the offset being dependent on the deviation of the target value ($P^*_{M1}$, $P^*_{M2}$) from a DC power of the master terminal (TM1, TM2).

3. Method according to one of the preceding claims, wherein the first tolerance range ($U_N$, $\Delta U$) is received from a conventional power generator (CP1, CP2) at the master terminal (TM1, TM2) and/or the second tolerance range ($\underline{P}_{S1}$, $\overline{P}_{S1}$,..., $\underline{P}_{S3}$, $\overline{P}_{S3}$) is received from a renewable power generator (PV, W) or a load device (M) at the slave terminal (TS1,..., TS3).

4. Method according to one of the preceding claims, wherein the DC voltage set point ($u_{st1}$, $u_{st2}$) is transmitted to a conventional power generator (CP1, CP2) at the master terminal (TM1, TM2).

5. Method according to one of the preceding claims, wherein the set of DC power flow equations comprise a linearized DC power flow equation.

6. Method according to claim 5, wherein a linearization leading to the linearized DC power flow equation is based on neglecting higher order terms in deviations of the DC voltages of the master terminal (TM1, TM2) and of the slave terminal (TS1,...,TS3) from a nominal DC voltage.

7. Method according to one of the preceding claims, wherein the robust optimization process is a linear robust optimization process based on a linear programming routine.

8. Controller (CTL) for controlling a voltage in a DC power grid comprising a master terminal (TM1, TM2) controlling a DC voltage of the master terminal and a slave terminal (TS1,...,TS3) controlling a DC power of the slave terminal, the controller (CTL) being configured to perform a method according to one of the preceding claims.

9. Computer program product for controlling a voltage in a DC power grid comprising a master terminal (TM1, TM2) controlling a DC voltage of the master terminal and a slave terminal (TS1,...,TS3) controlling a DC power of the slave terminal, the computer program product being adapted to perform a method according to one of the claims 1 to 7.

**Patentansprüche**

1. Verfahren zur Steuerung einer Spannung in einem Gleichstromnetz, das einen Master-Anschluss (TM1, TM2), der eine Gleichspannung des Master-Anschlusses steuert, und einen Slave-Anschluss (TS1, ..., TS3), der eine Gleichstromleistung des Slave-Anschlusses steuert, umfasst, wobei das Verfahren Folgendes umfasst:

a) das Empfangen eines ersten Toleranzbereichs ($U_N$, $\Delta U$) für Gleichspannungen des Master-Anschlusses (TM1, TM2) und des Slave-Anschlusses (TS1, ..., TS3),

b) das Empfangen eines zweiten Toleranzbereichs ($\underline{P}_{S1}$, $\overline{P}_{S1}$, ..., $\underline{P}_{S3}$, $\overline{P}_{33}$) für die Gleichstromleistung des Slave-Anschlusses (TS1, ..., TS3),

c) das mittels eines Prozessors erfolgende Ausführen eines robusten Optimierungsprozesses für einen Satz von Gleichstromleistungsflussgleichungen, in denen Werte für Gleichspannungen und Gleichströme des Master-Anschlusses (TM1, TM2) und des Slave-Anschlusses (TS1, ..., TS3) kombiniert sind,

d) das Eingeben des ersten und des zweiten Toleranzbereichs in den robusten Optimierungsprozess, wobei der erste Toleranzbereich ($U_N$, $\Delta U$) als robuste Optimierungsnebenbedingung und der zweite Toleranzbereich ($\underline{P}_{S1}$, $\overline{P}_{S1}$, ..., $\underline{P}_{S3}$, $\overline{P}_{S3}$) als robuste Optimierungsunsicherheit verwendet werden,

e) das mittels des robusten Optimierungsprozesses erfolgende Bestimmen eines Gleichspannungseinstell-

punkts ($u_{st1}$, $u_{st2}$) für den Master-Anschluss (TM1, TM2), sodass der Satz von Gleichstromleistungsflussgleichungen und die robuste Optimierungsnebenbedingung für den zweiten Toleranzbereich ($\underline{P}_{S1}$, $\overline{P}_{S1}$, ..., $\underline{P}_{S3}$, $\overline{P}_{S3}$) erfüllt sind, und

f) das Steuern der Gleichspannung des Master-Anschlusses (TM1, TM2) gemäß dem bestimmten Gleichspannungseinstellpunkt ($u_{st1}$, $u_{st2}$), wobei ein Zielwert ($P^*_{M1}$, $P^*_{M2}$) für eine Zielgleichstromleistung des Master-Anschlusses (TM1, TM2) empfangen wird,

der Zielwert ($P^*_{M1}$, $P^*_{M2}$) in den robusten Optimierungsprozess eingegeben wird, wobei eine Abweichung des Zielwerts ($P^*_{M1}$, $P^*_{M2}$) von einer Gleichstromleistung des Master-Anschlusses (TM1, TM2) in einer robusten Optimierungskostenfunktion berücksichtigt wird, und

der Gleichspannungseinstellpunkt ($u_{st1}$ $u_{st2}$) so bestimmt wird, dass die robuste Optimierungskostenfunktion für den zweiten Toleranzbereich ($\underline{P}_{S1}$, $\overline{P}_{S1}$, ..., $\underline{P}_{S3}$, $\overline{P}_{S3}$) minimiert wird.

2. Verfahren nach Anspruch 1, wobei ein Zielwert ($P^*_{M1}$, $P^*_{M2}$) für eine Zielgleichstromleistung des Master-Anschlusses (TM1, TM2) empfangen wird und beim Steuern der Gleichspannung des Master-Anschlusses (TM1, TM2) eine Verschiebung zum bestimmten Gleichspannungseinstellpunkt ($u_{st1}$, $u_{st2}$) eingeschlossen ist, wobei die Verschiebung von der Abweichung des Zielwerts ($P^*_{M1}$, $P^*_{M2}$) von einer Gleichstromleistung des Master-Anschlusses (TM1, TM2) abhängt.

3. Verfahren nach einem der vorhergehenden Ansprüche, wobei der erste Toleranzbereich ($U_N$, $\Delta U$) von einem herkömmlichen Stromgenerator (CP1, CP2) am Master-Anschluss (TM1, TM2) empfangen wird und/oder der zweite Toleranzbereich ($\underline{P}_{S1}$, $\overline{P}_{S1}$, ..., $\underline{P}_{S3}$, $\overline{P}_{S3}$) von einem Generator für erneuerbare Energie (PV, W) oder einer Aufladeeinrichtung (M) am Slave-Anschluss (TS1, ..., TS3) empfangen wird.

4. Verfahren nach einem der vorhergehenden Ansprüche, wobei der Gleichspannungseinstellpunkt ($u_{st1}$, $u_{st2}$) zu einem herkömmlichen Stromgenerator (CP1, CP2) am Master-Anschluss (TM1, TM2) übertragen wird.

5. Verfahren nach einem der vorhergehenden Ansprüche, wobei der Satz von Gleichstromleistungsflussgleichungen eine linearisierte Gleichstromleistungsflussgleichung umfasst.

6. Verfahren nach Anspruch 5, wobei eine zur linearisierten Gleichstromleistungsflussgleichung führende Linearisierung darauf basiert, dass Terme höherer Ordnung in Abweichungen der Gleichspannungen des Master-Anschlusses (TM1, TM2) und des Slave-Anschlusses (TS1, ..., TS3) von einer Nenngleichspannung vernachlässigt werden.

7. Verfahren nach einem der vorhergehenden Ansprüche, wobei es sich beim robusten Optimierungsprozess um einen linearen robusten Optimierungsprozess handelt, der auf einer linearen Programmierroutine basiert.

8. Controller (CTL) zur Steuerung einer Spannung in einem Gleichstromnetz, das einen Master-Anschluss (TM1, TM2), der eine Gleichspannung des Master-Anschlusses steuert, und einen Slave-Anschluss (TS1, ..., TS3), der eine Gleichstromleistung des Slave-Anschlusses steuert, umfasst, wobei der Controller (CTL) so konfiguriert ist, dass er ein Verfahren nach einem der vorhergehenden Ansprüche ausführt.

9. Computerprogrammprodukt zur Steuerung einer Spannung in einem Gleichstromnetz, das einen Master-Anschluss (TM1, TM2), der eine Gleichspannung des Master-Anschlusses steuert, und einen Slave-Anschluss (TS1, ..., TS3), der eine Gleichstromleistung des Slave-Anschlusses steuert, umfasst, wobei das Computerprogrammprodukt so angepasst ist, dass es ein Verfahren nach einem der Ansprüche 1 bis 7 ausführt.

**Revendications**

1. Un procédé de commande d'une tension dans un réseau électrique c.c. comprenant un terminal maître (TM1, TM2) commandant une tension c.c. du terminal maître et un terminal esclave (TS1, ..., TS3) commandant une puissance c.c. du terminal esclave, le procédé comprenant :

a) la réception d'une première plage de tolérance ($U_N$, $\Delta U$) destinée à des tensions c.c. du terminal maître (TM1, TM2) et du terminal esclave (TS1, ..., TS3),
b) la réception d'une deuxième plage de tolérance ($\underline{P}_{S1}$, $\overline{P}_{S1}$, ..., $\underline{P}_{S3}$, $P_{S3}$) destinée a la puissance c.c. du terminal esclave (TS1, ..., TS3),

c) l'exécution, par un processeur, d'un procédé d'optimisation robuste pour un ensemble d'équations de flux de puissance c.c. combinant des valeurs pour des tensions c.c. et des puissances c.c. du terminal maître (TM1, TM2) et du terminal esclave (TS1, ..., TS3),

d) l'entrée des première et deuxième plages de tolérance dans le procédé d'optimisation robuste, au moyen de la première plage de tolérance ($U_N$, $\Delta U$) en tant que contrainte d'optimisation robuste et de la deuxième plage de tolérance ($\underline{P}_{S1}, \overline{P}_{S1}, ..., \underline{P}_{S3}, P_{S3}$) en tant qu'incertitude d'optimisation robuste,

e) la détermination par le procédé d'optimisation robuste d'un point de consigne de tension c.c. ($u_{st1}$, $u_{st2}$) pour le terminal maître (TM1, TM2) de sorte que l'ensemble d'équations de flux de puissance c.c. et la contrainte d'optimisation robuste soient satisfaites pour la deuxième plage de tolérance ($\underline{P}_{S1}, \overline{P}_{S1}, ..., \underline{P}_{S3}, \overline{P}_{S3}$), et

f) la commande de la tension c.c. du terminal maître (TM1, TM2) en fonction du point de consigne de tension c.c. ($u_{st1}$, $U_{st2}$) déterminé, dans lequel

une valeur cible ($P^*_{M1}$, $P^*_{M2}$) pour une puissance c.c. cible du terminal maître (TM1, TM2) est reçue,

la valeur cible ($P^*_{M1}$, $P^*_{M2}$) est entrée dans le procédé d'optimisation robuste en prenant en compte un écart de la valeur cible ($P^*_{M1}$, $P^*_{M2}$) à partir d'une puissance c.c. du terminal maître (TM1, TM2) dans une fonction de coût d'optimisation robuste, et

le point de consigne de tension c.c. ($u_{st1}$, $u_{st2}$) est déterminé de sorte que la fonction de coût d'optimisation robuste soit minimisée pour la deuxième plage de tolérance ($\underline{P}_{S1}, \overline{P}_{S1}, ..., \underline{P}_{S3}, \overline{P}_{S3}$).

2. Le procédé selon la revendication 1, dans lequel

une valeur cible ($P^*_{M1}$, $P^*_{M2}$) pour une puissance c.c. cible du terminal maître (TM1, TM2) est reçue, et

lors de la commande de la tension c.c. du terminal maître (TM1, TM2), un décalage vers le point de consigne de tension c.c. ($u_{st1}$, $u_{st2}$) déterminé est inclus, le décalage dépendant de l'écart de la valeur cible ($P^*_{M1}$, $P^*_{M2}$) à partir d'une puissance c.c. du terminal maître (TM1, TM2).

3. Le procédé selon l'une quelconque des revendications précédentes, dans lequel la première plage de tolérance ($U_N$, $\Delta U$) est reçue à partir d'un générateur d'électricité conventionnel (CP1, CP2) au niveau du terminal maître (TM1, TM2) et/ou

la deuxième plage de tolérance ($\underline{P}_{S1}, \overline{P}_{S1}, ..., \underline{P}_{S3}, \overline{P}_{S3}$) est reçue à partir d'un générateur d'électricité renouvelable (PV, W) ou d'un dispositif de charge (M) au niveau du terminal esclave (TS1, ..., TS3) .

4. Le procédé selon l'une quelconque des revendications précédentes, dans lequel le point de consigne de tension c.c. ($u_{st1}$, $u_{st2}$) est transmis à un générateur d'électricité conventionnel (CP1, CP2) au niveau du terminal maître (TM1, TM2).

5. Le procédé selon l'une quelconque des revendications précédentes, dans lequel l'ensemble d'équations de flux de puissance c.c. comprend une équation de flux de puissance c.c. linéarisée.

6. Le procédé selon la revendication 5, dans lequel une linéarisation conduisant à l'équation de flux de puissance c.c. linéarisée est basée sur la négligence de termes d'ordre supérieur dans des écarts des tensions c.c. du terminal maître (TM1, TM2) et du terminal esclave (TS1, ..., TS3) à partir d'une tension c.c. nominale.

7. Le procédé selon l'une quelconque des revendications précédentes, dans lequel le procédé d'optimisation robuste est un procédé d'optimisation robuste linéaire basé sur une routine de programmation linéaire.

8. Un dispositif de commande (CTL) destiné à la commande d'une tension dans un réseau électrique c.c. comprenant un terminal maître (TM1, TM2) commandant une tension c.c. du terminal maître et un terminal esclave (TS1, ..., TS3) commandant une puissance c.c. du terminal esclave, le dispositif de commande (CTL) étant configuré de façon à exécuter un procédé selon l'une quelconque des revendications précédentes.

9. Un produit de programme informatique destiné à la commande d'une tension dans un réseau électrique c.c. comprenant un terminal maître (TM1, TM2) commandant une tension c.c. du terminal maître et un terminal esclave (TS1, ..., TS3) commandant une puissance c.c. du terminal esclave, le produit de programme informatique étant adapté de façon à exécuter un procédé selon l'une quelconque des revendications 1 à 7.

FIG

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012044369 A1

**Non-patent literature cited in the description**

- DC voltage limit compliance in voltage-source converter based multi-terminal HVDC. **WEIXING LU et al.** POWER ENGINEERING SOCIETY GENERAL MEETING. IEEE, 12 June 2005, 1290-1295

- **KORY W. HEDMAN.** The Application of Robust Optimizationin Power Systems Empowering Minds to Engineer the Future Electric Energy System. Arizona State University, 31 August 2014